Europäisches Patentamt

European Patent Office

Office européen des brevets

(11) Publication number: **0 166 554**
**B1**

# EUROPEAN PATENT SPECIFICATION

(45) Date of publication of patent specification: **02.11.89**

(21) Application number: **85304205.9**

(22) Date of filing: **13.06.85**

(51) Int. Cl.⁴: **B 68 B 1/04,** A 01 K 27/00,
B 29 C 67/14

(54) Improvements relating to stitched rubber equipment for horses.

(30) Priority: **26.06.84 GB 8416254**

(43) Date of publication of application:
**02.01.86 Bulletin 86/01**

(45) Publication of the grant of the patent:
**02.11.89 Bulletin 89/44**

(84) Designated Contracting States:
**DE FR IT**

(56) References cited:
**EP-A-0 071 209**
**CH-A- 429 500**
**FR-A-1 357 693**
**FR-A-2 181 483**
**FR-A-2 330 530**
**GB-A-1 557 475**
**US-A-1 593 672**
**US-A-3 762 980**
**US-A-4 196 251**
**US-A-15 228 42**

(73) Proprietor: **Equus Polymer Limited**
**Monmer Close Stringes Lane**
**Willenhall West Midlands WV13 1JR (GB)**

(72) Inventor: **Thomas, Roy Lewis Pedrus**
**4 Wenthworth Avenue**
**Castle Bromwich West Midlands B36 9AY (GB)**
Inventor: **Andrews, Harold John**
**6 Bodmin Close**
**Walsall West Midlands WS5 3HZ (GB)**

(74) Representative: **Stonehouse, Sidney William**
**et al**
**Barker, Brettell & Duncan 138 Hagley Road**
**Edgbaston**
**Birmingham B16 9PW (GB)**

Courier Press, Leamington Spa, England.

## Description

This invention relates to stitched rubber item of equipment for horses. Among such equipment are rein grips which are stitched to reins, and also some horse boots.

A stitched rubber item of equipment for horses according to the prior art portion of Claim 1 is known from GB—A—1557475.

By the term "rubber" is meant both natural and synthetic rubber.

Conventionally the rubber used in such equipment has been backed with canvas or leather which provides support for stitching passing through the rubber. At least in the case of rein grips and some horse boots, such as brushing boots, it is usual for the rubber to be moulded on to the canvas so that the canvas is thereby keyed to the back of the rubber. The canvas then also serves to reinforce the rubber by restraining stretching of the rubber. Other types of horse boots, overreach boots for example, have leather patches with which stitching applied to the rubber engages for support. The canvas or leather and the extra work which is entailed incorporating such support material into the equipment does add significantly to the cost of manufacture of the equipment.

The present invention provides an alternative means of support for the stitching.

According to the present invention there is provided a stitched rubber item of equipment for horses wherein the rubber has mixed into it reinforcing fibres and stitching applied to the rubber is engaged with the fibres which provide support in the rubber for the stitching.

Particular embodiments of the invention are set out in dependent Claims 2—10.

The fibres must be capable of withstanding such temperatures and pressures as the rubber may be subjected to during manufacture.

The fibres may be of textile material, conveniently scrap textile material, such as shredded canvas for example, or they may be of synthetic material. A suitable synthetic material is the cellulose fibre material made and sold by Monsanto Company under the trade name Santoweb®.

The fibres may be randomly disposed in the rubber, the stitching being retained by those of the fibres which are suitably orientated. Alternatively, the fibres may be similarly, or substantially similarly, orientated in the rubber in which case they should be disposed transversely to, or at least obliquely to, a row or rows of stitching applied to the rubber in order to assist attachment of the stitching to the fibres.

By reinforcing the rubber with the fibres some saving in the cost of manufacturing the stitched rubber equipment may be achieved. The fibres may be comparable in cost to the canvas used conventionally, but the fact that canvas or leather does not have to be prepared and positioned for application to the rubber simplifies and speeds up the manufacturing procedure, which can result in an appreciable saving in cost.

Further advantages may be obtained by the invention. The equipment may be more flexible than those in which the rubber is backed by canvas or leather. This has an advantage in respect of rein grips which are applied to leather reins because with use and oiling the leather reins will tend to stretch and the rein grips stretch with the reins, rather than breaking down as can happen with rein grips made of canvas-backed rubber. The inclusion of the fibres also reinforces the rubber against wear from rubbing, as for example by the gloves of a rider on a rein grip.

An embodiment of the invention as applied to a rein grip will now be described by way of example with reference to the accompanying drawings in which:—

Figure 1 is a simplified perspective view of a portion of a roll of calendered sheet rubber from which the rein grip is to be made,

Figure 2 is a plan view of part of the formed rein grip,

Figure 3 is a plan view of part of a rein with the rein grip attached to it, and

Figure 4 is an enlarged fragmentary section on line 4—4 of Figure 3.

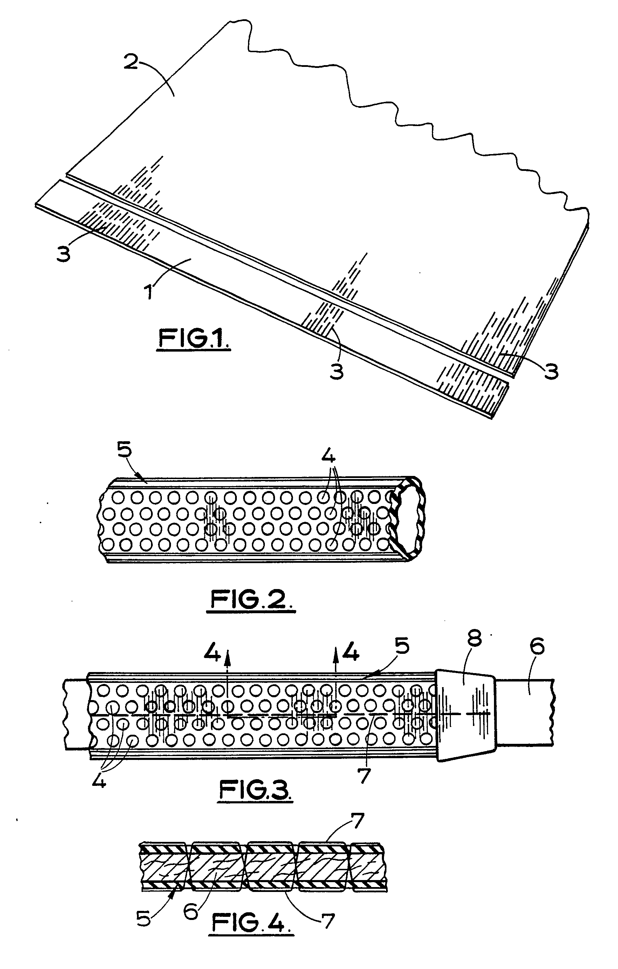

In accordance with known methods of manufacture, rubber for the rein grip is cut as a transverse strip 1, Figure 1, from a roll 2 of calendered sheet rubber. The sheet rubber differs from that used hitherto, however, in that it has reinforcing fibres 3 in it, preferably Santoweb® fibres, the fibres having been mixed in with the rubber compound. The fibres 3 extend longitudinally of the sheet rubber in the roll 2. Thus in the transverse strip 1 cut from the sheet for the rein grip the fibres 3 are disposed transversely of the strip as can be seen in Figure 1.

Again in accordance with known methods of manufacture, the strip 1 of fibre-reinforced rubber is folded longitudinally about a flat mandrel, not shown, and inserted in a mould, not shown, in which it is heated and formed into a closed flat tube on the mandrel with a grip pattern on its external surface, comprising, for example, staggered rows of nodules 4, Figures 2 and 3, along the tube. After curing, the rein grip so formed, indicated generally by reference 5 in the drawings, is ready for application to a rein 6, Figures 3 and 4.

The internal dimensions of the flat tubular rein grip 5 are determined in relation to the rein 6 to which it is intended to be fitted such that it is a close fit on the rein. The rein grip is secured in position on the rein 6 by stitching 7 in known manner. There may be a single row of stitching 7, as shown in Figure 3, or two or even more rows along the rein grip, depending upon the width of the rein. The fibre reinforcement in the rubber provides support in the rubber for the stitching 7 so that the rein grip is held securely and reliably on the rein.

Keepers 8, Figure 3, secured to the rein 6 at opposite ends of the rein grip 5 may be fibre-reinforced rubber mouldings. The fibre-reinforcement, which may be similar to that in the rein grip, again provides support for stitching securing the keepers 8 to the rein. Leather or plastics keepers may be provided instead, if desired.

As an alternative to producing the fibre-reinforced rubber initially as a sheet from which strips are cut for the making of rein grips in the manner described, the fibre-reinforced rubber may be produced as a tubular extrusion. The extrusion may be formed with a grip pattern in a subsequent moulding process.

It will be readily understood that other items of equipment for horses, or parts thereof, which are made of rubber and are stitched can be made using fibre-reinforced rubber produced in sheet form, or by extrusion and/or moulding.

## Claims

1. A stitched rubber item of equipment for horses characterised in that the rubber has mixed into it reinforcing fibres (3), and in that stitching (7) applied to the rubber is engaged with the fibres (3) which provide support in the rubber for the stitching (7).

2. A stitched rubber item according to claim 1 characterised in that the fibres (3) are of textile material.

3. A stitched rubber item according to claim 2 characterised in that the textile material is shredded canvas.

4. A stitched rubber item according to claim 1 characterised in that the fibres (3) are of synthetic material.

5. A stitched rubber item according to any preceding claim characterised in that the fibres (3) are randomly disposed in the rubber.

6. A stitched rubber item according to any of claims 1 to 4 characterised in that the fibres (3) are similarly, or substantially similarly, orientated in the rubber transversely or obliquely to a row of the stitching (7).

7. In combination a horse's rein (6) and a rubber rein grip (5) attached by stitching (7) to the rein (5), characterised in that the rein grip (5) is in accordance with the stitched rubber item as claimed in any preceding claim and in that the stitching (7) engages with the fibres (3) in the rubber of the rein grip (5).

8. The combination according to claim 7 characterised in that the rein grip (5) is made from a strip (1) of sheet rubber containing the reinforcing fibres (3) the strip (1) having been folded longitudinally, formed into a closed tube in a mould and cured.

9. The combination according to claim 7 characterised in that the rein grip (5) is made from a tubular extrusion of the rubber containing the reinforcing fibres.

10. The combination of a horse's rein (6) and on the rein (6) a rubber rein grip (5) and rubber keepers (8) at opposite ends of the rein grip (5), the rein grip (5) and keepers (8) being attached by stitching (7) to the rein, characterised in that the rein grip (5) and keepers (8) are each in accordance with the stitched rubber item as claimed in any of claims 1 to 7 and in that the stitching (7) engages with the fibres (3) in the rubber of the rein grip (5) and keepers (8).

## Patentansprüche

1. Genähter Gummigegenstand für Pferdegeschirr, dadurch gekennzeichnet, daß in den Gummi Verstärkungsfasern (3) eingemischt sind, und daß eine im Gummi angebrachte Naht (7) mit den Fasern (3) in Eingriff steht, wodurch die Naht (7) im Gummi gehalten wird.

2. Genähter Gummigegenstand nach Anspruch 1, dadurch gekennzeichnet, daß die Fasern (3) aus Textilmaterial sind.

3. Genähter Gummigegenstand nach Anspruch 2, dadurch gekennzeichnet, daß das Textilmaterial zerrissenes Baumwollgewebe ist.

4. Genähter Gummigegenstand nach Anspruch 1, dadurch gekennzeichnet, daß die Fasern (3) aus synthetischem Material sind.

5. Genähter Gummigegenstand nach einem der vorhergehenden Ansprüche, dadurch gekennzeichnet, daß die Fasern (3) willkürlich in dem Gummi verteilt sind.

6. Genähter Gummigegenstand nach einem der Ansprüche 1 bis 4, dadurch gekennzeichnet, daß die Fasern (3) in dem Gummi gleich oder im wesentlichen gleich, quer oder schräg liegend zu einer Nahtreihe orientiert sind.

7. Kombination eines Pferdezügels (6) und eines Gummizügelgriffs (5), der durch eine Naht (7) an dem Zügel (5) angebracht ist, dadurch gekennzeichnet, daß der Zügelgriff (5) dem in einem der vorhergehen Ansprüche beanspruchten genähten Gummigegenstand entspricht, und daß die Naht (7) mit den Fasern (3) in dem Gummi des Zügelgriffs (5) in Eingriff steht.

8. Kombination nach Anspruch 7, dadurch gekennzeichnet, daß der Zügelgriff (5) aus einem Streifen (1) blattförmigen Gummis, der die Verstärkungsfasern (3) enthält, hergestellt ist, wobei der Streifen (1) längsgefaltet worden ist, in einer Form in einen geschlossenen Schlauch verformt und vulkanisiert worden ist.

9. Kombination nach Anspruch 7, dadurch gekennzeichnet, daß der Zügelgriff (5) aus einem rohrförmigen Extrudat des die Verstärkungsfasern enthaltenden Gummis hergestellt ist.

10. Kombination eines Pferdezügels (6) und eines Gummizügelgriffs (5) auf dem Zügel (6) und Gimmihaltern (8) an entgegengesetzten Enden des Zügelgriffs (5), wobei der Zügelgriff (5) und die Halter (8) durch die Naht (7) an dem Zügel angebracht sind, dadurch gekennzeichnet, daß der Zügelgriff (5) und die Halter (8) jeweils mit dem genähten Gummigegenstand gemäß einem der Ansprüche 1 bis 7 übereinstimmt, und daß die Naht (7) mit den Fasern (3) in dem Gummi des Zügelgriffs (5) und den Haltern (8) in Eingriff steht.

## Revendications

1. Elément d'équipement en caoutchouc piqué pour chevaux, caractérisé en ce que des fibres de renforcement (3) sont mélangées au caoutchouc et en ce qu'une piqûre (7) appliquée au caoutchouc pénètre dans les fibres (3) qui fournissent, dans le caoutchouc, un support pour cette piqûre (7).

2. Elément de caoutchouc piqué selon la revendication 1, caractérisé en ce que les fibres (3) sont constitués par une matière textile.

3. Elément de caoutchouc piqué selon la revendication 2, caractérisé en ce que la matière textile est une toile effilochée.

4. Elément de caoutchouc piqué selon la revendication 1, caractérisé en ce que les fibres (3) sont réalisées en une matière synthétique.

5. Elément de caoutchouc piqué selon l'une quelconque des revendications précédentes, caractérisé en ce que les fibres (3) sont disposées de façon aléatoire dans le caoutchouc.

6. Elément de caoutchouc piqué selon l'une quelconque des revendications 1 à 4, caractérisé en ce que les fibres (3) sont orientées, d'une manière similaire ou sensiblement similiare, dans le caoutchouc, transversalement ou obliquement par rapport à une ligne de la piqûre (7).

7. Ensemble combiné formé d'une rêne de cheval (6) et d'un élément (5) de préhension de la rêne, fixé par une piqûre (7) à la rêne (6), caractérisé en ce que l'organe de préhension (5) de la rêne est réalisé conformément à l'élément en caoutchouc piqué tel que revendiqué dans l'une quelconque des revendications précédentes, et en ce que la piqûre (7) pénètre dans les fibres (3) situées dans le caoutchouc de l'élément (5) de préhension de la rêne.

8. Ensemble combiné selon la revendication 7, caractérisé en ce que l'élément (5) de préhension de la rêne est constitué par une bande (1) d'une feuille de caoutchouc contenant les fibres de renforcement (3), la bande (1) ayant été repliée longitudinalement, mis sous la forme d'un tube fermé à l'intérieur d'un moule et vulcanisée.

9. Ensemble combiné selon la revendication 7, caractérisé en ce que l'élément (5) de préhension de la rêne est formé à partir d'une pièce tubulaire extrudée constituée par le caoutchouc contenant les fibres de renforcement.

10. Ensemble combiné formé d'une rêne de cheval (6) et d'un élément (5) en caoutchouc de préhension de la rêne, placé sur cette dernière, et d'éléments de retenue (8) situés sur des extrémités opposées de l'élément (5) de préhension de la rêne, cet élément (5) de préhension de la rêne et les éléments de retenue (8) étant fixés au moyen d'une piqûre (7) à la rêne, caractérisé en ce que l'élément (5) de préhension de la rêne et les éléments de retenue (8) sont constitués chacun conformément à l'élément en caoutchouc piqué tel que revendiqué dans l'une quelconque des revendications 1 à 7, et en ce que la piqûre (7) pénètre dans les fibres (3) du caoutchouc de l'élément (5) de préhension de la rêne et des éléments de retenue (8).

FIG.1.

FIG.2.

FIG.3.

FIG.4.

1